# EUROPEAN PATENT APPLICATION

(11) **EP 1 227 416 A2**
(43) Date of publication of application: **31.07.2002**
(21) Application number: 02250307.2
(22) Date of filing: 16.01.2002
(51) Int. Cl.: G06F 17/30

(54) **Data format conversion**

(30) Priority: 17.01.2001 GB 0101297
(71) Applicant: The PenPic Corporation Limited, Carmarthen SA32 8AE (GB)
(72) Inventor: Burgess, Martin, Carmarthen SA32 8AE (GB); Davis, Clayton, Swansea SA4 1EN (GB)
(74) Representative: Davies, Gregory Mark

(57) **Abstract**

Apparatus for applying a signature or other hand written data to a file or document created, stored and/or displayed in html format, comprising input means (10) for electronically capturing hand written data and including storage means (12) for storing the data in bit map format. The apparatus further includes a module (14) which attaches a key or link into a computer programme being used to create an html document such as an e-mail and creates an option (16) for selection by the user when the hand written data (18) is required to be added to the document (20). When the option (16) is selected, the module (14) cause a routine which gets the stored data from the storage means (12) and converts the data from bit map format to html format, which is the same format as that used to create a web page or conventional e-mail. Once the text is converted to html format, it is added to the e-mail being created at a position chosen by the user.

## Description

This invention relates to apparatus and method for data format conversion and, in particular to apparatus and method for conversion of data from an image file format to an html (hypertext markup language) format.

It is often desirable to be able to apply a signature or other handwritten (or drawn) data to an e-mail or web page, for example. In known arrangements, this is facilitated by using a graphics package or the like to create and store a signature or other handwritten or drawn data which can then be attached as an image file to the end of an e-mail prior to transmission.

However, in order to view the sender's signature, the recipient of the e-mail must actually open the attachment in which it is stored. This is not only inconvenient, but can also appear impersonal. Further, there is the possibility of an unauthorised person applying another person's signature to an e-mail in order to deceive the recipient of the e-mail as to its origin.

We have now devised an arrangement which overcomes the problems outlined above. In accordance with a first aspect of the present invention, there is provided apparatus for applying a signature or other handwritten data to a file or document created, stored and/or displayed in html format, the apparatus comprising means for capturing said handwritten data in a first data format, means for converting said handwritten data into html format and means for applying said handwritten data in html format to said file or document.

Also in accordance with the first aspect of the present invention there is provided a method for applying a signature or other handwritten data to a file or document created, stored and/or displayed in html format, the method comprising the steps of capturing said handwritten data in a first data format, converting said handwritten data into html format, and applying said handwritten data in html format to said file or document.

The first data format in which said handwritten data is captured is preferably in an image file format, for example a bit map format. In its broadest sense, the present invention comprises an apparatus and method for converting data from an image file to html format.

The means for creating and capturing the handwritten data preferably comprises a pen-based input strip, such as an LCD strip, liquid plasma strip, or any other suitable input means. This provides a convenient way of allowing the user to create a true representation of their signature, for example, and capture it electronically in an image file.

The apparatus comprises means for attaching a key or link into a software package for creating and transmitting documents in html format, such as a software package for creating and sending e-mails. The key or link creates an additional option within the software package which, when selected, retrieves the handwritten data created on the input strip and captured electronically in image file format, converts the data from an image file, such as bit map format, to html format, and adds the handwritten data to an html document in a user-defined position. The handwritten data is displayed as part of the document without the need to open an attachment. In a preferred embodiment, the apparatus calls for the handwritten data to be created and captured when the key or link is selected and then substantially immediately converts it to html format and adds it to the html document. Thus, no image file is required to be stored, which has obvious security benefits.

In one preferred embodiment, the apparatus includes means for creating an encrypted code number associated with handwritten data, say a signature, which has been created, captured and converted to html format. The encrypted code number may be arranged to carry information which permits one or more of the following:
a) to produce a visual representation of the signature when decoded (i.e. to allow visual verification by the recipient);
b) to allow a more rigorous comparison of the key characteristics of the signature with a signature previously received from the same sender (i.e. the encrypted code number comprises an encrypted digitised summary of the key characteristics of the incoming signature which can be compared with the encrypted code number associated with a signature previously received from the same sender, and the probability that the writer of the two signatures is the same person can be calculated and displayed);
c) to display the date and/or time on the sender's PC when the handwritten data was added to the document (e.g. when it was signed);
d) to display the date and time on a remote internet server when the handwritten data was added to the document (e.g. when it was signed) if the sender was logged onto the Internet at the time of signature (it should be borne in mind that the encrypted code number might indicate the date and time that the handwritten data was added to the document in the case where it was converted to html format and added to the document in real time, and in the case where a stored image file is converted to html format and added to the document);
e) to display an indication as to whether or not the document has been changed since the handwritten date (e.g. signature) was added;
f) to utilise an optional PIN or security code number (for example, a 5-digit base code) which can be incorporated into the encrypted code number and which has been pre-agreed between two or more parties (for example, verbally), such that the handwritten data (e.g. signature) cannot be visually reproduced and a comparison between the signature and a previously-stored handwritten date (e.g. signature) cannot be performed without the recipient having entered the pre-agreed security code number. It is envisaged the apparatus could be supplied with a default security code number which can be changed by the user(s) if this feature is required to be utilised.

An exemplary embodiment of the invention will now be described with reference to the accompanying drawing which is a schematic block diagram to illustrate the basic operation of apparatus according to an exemplary embodiment of the invention.

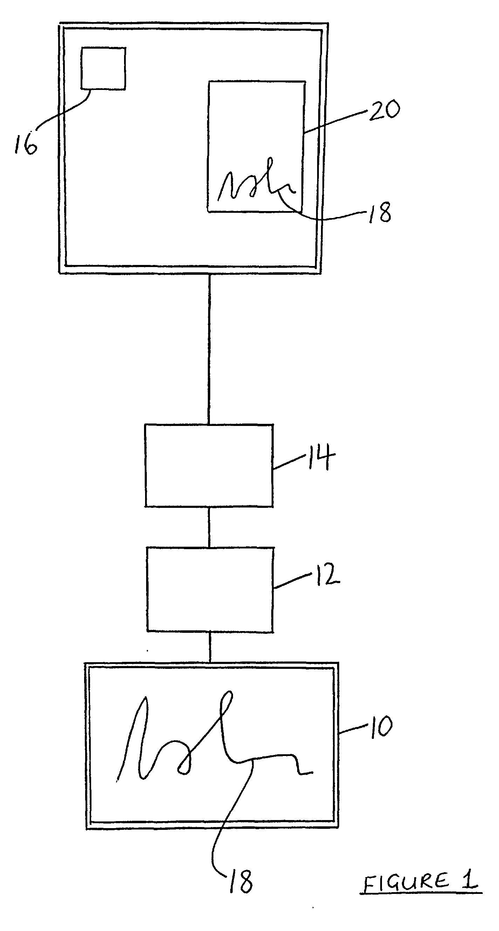

Referring to Figure 1 of the drawings, apparatus according to an exemplary embodiment of the invention comprises input means 10 for electronically capturing handwritten data and including storage means 12 for storing the data in bit map format. The apparatus also includes a module 14 which attaches a key or link into a computer program being used to create an html document such as an e-mail, and creates an option 16 for selection by the user when the handwritten data 18 is required to be added to the document 20. When the option 16 is selected, the module 14 calls a routine which gets the stored data from the storage means 12 and converts the data from bit map format to html format, which is the same format as that used to create a web page or conventional e-mail.

Once the text is converted to html format, it is added to the e-mail being created at a position chosen by the user. Thus, if the text constitutes a signature, the user would probably (but not necessarily) choose to place it at the end of the e-mail message, as in conventional letters and the like. It should be noted that the signature is not an attachment in this case, but actually part of the html e-mail document and it is displayed as such with the rest of the document when the e-mail is transmitted and opened by the recipient.

In one embodiment, the handwritten data is captured and stored in bit map format and then converted to html format afterwards. However, in another embodiment, the data is converted to html format and added to the html document in real time as the handwritten data is created.

It is envisaged that the whole e-mail message or html document (excluding data which needs to be typed, such as the e-mail recipient's address) could be created by handwriting the desired text (and drawings, if appropriate) onto the input means and converting the input data to html format for transmission via e-mail or display on the internet.

An embodiment of the invention has been described above by way of example only and it will be apparent to a person skilled in the art that modifications and variations can be made without departing from the scope of the invention.

## Claims

1. Apparatus for applying a signature or other written date to a file or document created, stored and/or displayed in html format, the apparatus comprising means for capturing said hand written data in a first data format, means for converting said hand written data into Html format and means for applying said hand written data in html format in said file or document.

2. Apparatus according to claim 1, wherein said hand written data is captured in an image file format.

3. Apparatus according to claim 1, wherein said means for creating and capturing the hand written data comprises a pen-based input strip.

4. Apparatus according to claim 1, comprising means for attaching a key or link into a software package for creating and transmitting documents in html format.

5. Apparatus according to claim 4, wherein said key or link creates an additional option within the software package which, when selected, retrieves the hand written data created on the input strip and captured electronically in image file format, converts the data from an image file to html format, and adds the hand written data to an html document in a user-defined position.

6. Apparatus according to claim 5, wherein said apparatus calls for the hand written data to be created and captured when the key or link is selected and then substantially immediately converts it to html format and adds it to the html document.

7. Apparatus according to claim 1, including means for creating an encryptive code number associated with hand written data which has been created, captured and converted to html format.

8. Apparatus according to claim 7, wherein said encryptive code is arranged to carry information which permits one or more of the following:
a) to produce a visual representation of the signature when decoded (i.e. to allow visual verification by the recipient) ;
b) to allow a more rigorous comparison of the key characteristics of the signature with a signature previously received from the same sender (i.e. the encrypted code number comprises an encrypted digitised summary of the key characteristics of the incoming signature which can be compared with the encrypted code number associated with a signature previously received from the same sender, and the probability that the writer of the two signatures is the same person can be calculated and displayed);
c) to display the date and/or time on the sender's PC when the handwritten data was added to the document (e.g. when it was signed);
d) to display the date and time on a remote internet server when the handwritten data was added to the document (e.g. when it was signed) if the sender was logged onto the Internet at the time of signature (it should be borne in mind that the encrypted code number might indicate the date and time that the handwritten data was added to the document in the case where it was converted to html format and added to the document in real time, and in the case where a stored image file is converted to html format and added to the document);
e) to display an indication as to whether or not the document has been changed since the handwritten date (e.g. signature) was added;
f) to utilise an optional PIN or security code number (for example, a 5-digit base code) which can be incorporated into the encrypted code number and which has been pre-agreed between two or more parties (for example, verbally), such that the handwritten data (e.g. signature) cannot be visually reproduced and a comparison between the signature and a previously-stored handwritten date (e.g. signature) cannot be performed without the recipient having entered the pre-agreed security code number. It is envisaged the apparatus could be supplied with a default security code number which can be changed by the user(s) if this feature is required to be utilised.

9. A method for applying a signature or other hand written data to a file or document created, stored and/or displayed in Html format, the method comprising the steps of capturing the hand written data in a first data format, converting said hand written data into html format, and applying said hand written data in html format to said file or document.
